# EUROPÄISCHE PATENTSCHRIFT

(11) **EP 2 055 909 B1**
(45) Veröffentlichungstag und Bekanntmachung des Hinweises auf die Patenterteilung: **22.12.2010**
(21) Anmeldenummer: 08105370.4
(22) Anmeldetag: 18.09.2008
(51) Int. Cl.: F01N 3/10, F01N 3/20, F01N 3/28

(54) **Verfahren zum schadstoffemissionsarmen Betreiben eines Verbrennungsmotors und entsprechender Verbrennungsmotor**
Method for operating a combustion engine with low emission of pollutants and corresponding combustion engine
Procédé de fonctionnement pauvre en émissions de matières toxiques d'un moteur à combustion et moteur à combustion correspondant

(30) Priorität: 31.10.2007 DE 102007052153
(43) Veröffentlichungstag der Anmeldung: 06.05.2009
(73) Patentinhaber: Robert Bosch GmbH, 70442 Stuttgart (DE)
(72) Erfinder: Weber, Georg, 74336 Brackenheim (DE); Raatz, Thorsten, 71701 Schwieberdingen (DE)

(56) Entgegenhaltungen:
- EP-A- 0 916 389
- WO-A-2008/135805
- WO-A1-2005/024195
- DE-A1- 10 142 804
- DE-A1- 19 626 837
- DE-A1- 19 644 407
- DE-C1- 19 643 053
- JP-A- 2007 009 887
- US-A- 3 440 817
- US-A1- 2003 115 860
- US-A1- 2007 006 573

## Beschreibung

Die Erfindung betrifft ein Verfahren zum schadstoffemissionsarmen Betreiben eines Verbrennungsmotors, insbesondere für ein Kraftfahrzeug, mit einer Abgasanlage, die mindestens einen Katalysator und mindestens eine Emissions-Reduktionseinrichtung aufweist.

### Stand der Technik

Ein Verfahren zum schadstoffemissionsarmen Betreiben eines Verbrennungsmotors ist bekannt. Mit Hilfe des Schichtbetriebs kann der Kraftstoffverbrauch eines als Ottomotor ausgebildeten Verbrennungsmotors mit Direkteinspritzung im Teillastbereich gegenüber einem herkömmlich betriebenen Ottomotor signifikant gesenkt werden. Dies wird im Wesentlichen durch die Reduzierung der Ansaugdrosselverluste, eine thermodynamisch günstigere Gaszusammensetzung und die Verringerung der Wandwärmeverluste erreicht. Die magere Gemischzusammensetzung verhindert jedoch eine Reduktion von Stickoxiden im als Dreiwegekatalysator ausgebildeten Katalysator, weshalb ein spezielles NOx-Speicher-System (DeNOx-Katalysator) als Emissions-Reduktionseinrichtung eingesetzt wird. Der einwandfreie Betrieb dieser NOx-Speicher-Systeme ist dauerhaft nur in Verbindung mit schwefelarmem Kraftstoff gewährleistet. Dieser Kraftstoff ist aber derzeit nicht in allen Ländern flächendeckend verfügbar. Strenge Abgasvorschriften einiger Staaten stellen zusätzlich höchste Anforderungen an die Wirksamkeit und Langlebigkeit der NOx-Speicher-Systeme. Außerdem wird der Wirkungsgradvorteil durch Schichtladung infolge der erforderlichen Regeneration des DeNOx-Katalysators reduziert. Weiterhin ist das NOxSpeicher-System wesentlich teurer als ein herkömmliches Abgasnachbehandlungssystem.

Alternativ könnte ein SCR-Katalysator als Emissions-Reduktionseinrichtung zur Reduktion der Stickoxidemission eingesetzt werden. Die selektive katalytische Reduktion (SCR, selective catalytic reduction) ist eine effiziente Methode, um in sauerstoffhaltigen Abgasen Stickoxide (NOx) zu entfernen und zu Stickstoff und Wasser zu reduzieren. Als Reduktionsmittel wird hierbei meist Ammoniak (NH₃) verwendet, das aus einem NH₃-Zwischenspeicher, wie zum Beispiel einer Harnstoff-Wasser-Lösung (HWL/AdBlue) oder aus Feststoffen wie Ammoniumcarbamat, Ammoniumcarbonat in kleinen Mengen bedarfsgerecht erzeugt und dem Abgassystem zudosiert wird. Die bisherigen SCR-Katalysatoren sind nicht hochtemperaturbeständig (<700°C) und der SCR-Prozess wird durch vorhandene Kohlenwasserstoff-Emissionen empfindlich gestört. Das Abgas von Ottomotoren mit Direkteinspritzung (BDE-Motoren) erreicht aber im Bereich hoher Lasten sehr viel höhere Temperaturen. Hierbei werden BDE-Motoren nicht mehr mager betrieben, sondern mit stöchiomtrischem Luft-Kraftstoff-Verhältnis (Lambda=1-Konzept), wobei sich extrem hohe Stickoxid und zum Teil auch sehr hohen Kohlenwasserstoff-Emissionen ergeben. Dieser Betriebsbereich ist somit für Emissions-Reduktionseinrichtungen wie den SCR-Katalysator denkbar ungeeignet.

Aus der DE 19644407 ist es bekannt, einem Dreiwege-Katalysator einen Speicher-Katalysator vorzuschalten und den Speicher-Katalysator mit einem Umgehungspfad zu versehen.

Die WO 2005/024195 beschreibt eine Abgasanlage mit einem mit einem Umgehungspfad versehenen SCR-Katalysator.

### Offenbarung der Erfindung

Beim erfindungsgemäßen Verfahren ist vorgesehen, dass ein vom Verbrennungsmotor erzeugtes Abgas in einem Schichtbetrieb, also bei einem λ-Verhältnis ungleich Eins (λ≠1), durch die Emissions-Reduktionseinrichtung zum Katalysator geführt wird und in einem stöchiometrischen Betrieb, also bei einem λ-Verhältnis gleich Eins (λ=1), zumindest teilweise durch einen parallel zur Emissions-Reduktionseinrichtung geschalteten Bypass vom Verbrennungsmotor zum Katalysator geführt wird. Durch diese umschaltbare Abgasführung kann die Emissions-Reduktionseinrichtung im Schichtbetrieb die Schadstoffemissionen zusätzlich zum Katalysator reduzieren. Dazu wird sie in der Abgasanlage in Strömungsrichtung eines vom Verbrennungsmotor erzeugten Abgases zwischen dem Verbrennungsmotor und dem Katalysator angeordnet. Durch diese Anordnung kann die Emissions-Reduktionseinrichtung insbesondere im Teillastbetrieb des Verbrennungsmotors besonders effektiv arbeiten. Um die Emissions-Reduktionseinrichtung bei hohen Lasten (λ=1) des Verbrennungsmotors vor den hohen Abgastemperaturen zu schützen, wird der heiße Abgasstrom durch den Bypass unter Umgehung der Emissions-Reduktionseinrichtung zum Katalysator und/oder in einen Bereich der Abgasanlage geleitet, der strömungstechnisch vor dem Katalysator liegt. Selbstverständlich können vor, hinter und zwischen den genannten Komponenten der Abgasanlage auch weitere Komponenten angeordnet sein. Der Verbrennungsmotor ist insbesondere ein Ottomotor, vorzugsweise ein Ottomotor mit Direkteinspritzung, bei dem ein Umschalten der Abgasführung durch die Emissions-Reduktionseinrichtung und/oder durch den Bypass in Abhängigkeit vom jeweiligen λ-Verhältnis (Schichtbetrieb oder stöchiometrischer Betrieb) besonders sinnvoll ist. Der Katalysator ist insbesondere ein Dreiwegekatalysator. Dabei ist vorgesehen, dass die Emissions-Reduktionseinrichtung einen SCR-Katalysator und eine Einspritzvorrichtung aufweist, deren Einspritzeinrichtung ein Reduktionsmittels vor oder in den SCR-Katalysator einspritzt. Der SCR-Katalysator mit zugeordneter Einspritzvorrichtung zum Zudosieren von Reduktionsmittel, zum Beispiel einer wässrigen Harnstofflösung, ist eine effektive Emissions-Reduktionseinrichtung zum Reduzieren von Stickoxidemissionen. Der SCR-Katalysator ergänzt den Katalysator bei der Reduktion der Stickoxide im Abgas. Einspritzeinrichtung und SCR-Katalysator sind für hohe Abgastemperaturen jedoch ungeeignet.

Vorteilhafterweise wird der Verbrennungsmotor im Schichtbetrieb mit Luftüberschuss und/oder Ladungsschichtung betrieben. Dazu ist der Verbrennungsmotor insbesondere ein Ottomotor, vorzugsweise ein Ottomotor mit Direkteinspritzung. Beim Schichtbetrieb wird eine Ladungsschichtung erreicht, bei der einer für einen Lastpunkt geforderte Kraftstoffmenge nicht die entsprechende stöchiometrische Luftmenge zugeteilt wird. Durch den Schichtbetrieb wird der Kraftstoffverbrauch insbesondere im Teillastbereich gegenüber herkömmlichem Betrieb signifikant gesenkt. Um die niedrige Effizienz des Katalysators bei der mageren Gemischzusammensetzung zu kompensieren wird die Emissions-Reduktionseinrichtung im Schichtbetrieb zugeschaltet.

Insbesondere ist vorgesehen, dass die Führung des Abgases durch an- und abschalten des Bypasses und/oder ein Verstellen des Querschnitts des Bypasses erfolgt. Der Bypass ist dabei insbesondere so ausgestaltet und/oder angeordnet, dass der Abgasstrom bei angeschaltetem Bypass, beziehungsweise bei großem Querschnitt des Bypasses hauptsächlich oder ausschließlich durch den Bypass geführt ist.

Die Erfindung betrifft weiterhin einen Verbrennungsmotor, insbesondere zur Verwendung für ein vorstehend genanntes Verfahren, vorzugsweise für ein Kraftfahrzeug, mit einer Abgasanlage, die mindestens einen Katalysator und mindestens eine Emissions-Reduktionseinrichtung aufweist. Es ist vorgesehen, dass die Emissions-Reduktionseinrichtung in Strömungsrichtung eines vom Verbrennungsmotor erzeugten Abgases zwischen dem Verbrennungsmotor und dem Katalysator angeordnet ist und ein Bypass parallel zur Emissions-Reduktionseinrichtung geschaltetet ist, wobei die Abgasanlage zur wahlweisen Führung des Abgases durch die Emissions-Reduktionseinrichtung und/oder den Bypass mindestens ein Steuerungselement aufweist. Durch diese Anordnung wird das vom Verbrennungsmotor erzeugte Abgas im Schichtbetrieb durch die Emissions-Reduktionseinrichtung zum Katalysator geführt und bei hohen Lasten beziehungsweise im stöchiometrischen Betrieb zumindest teilweise durch den parallel zur Emissions-Reduktionseinrichtung geschalteten Bypass vom Verbrennungsmotor zum Katalysator geführt. Der Verbrennungsmotor weist die Abgasanlage auf. Er ist insbesondere ein Ottomotor, vorzugsweise ein Ottomotor mit Direkteinspritzung, bei dem ein Umschalten der Abgasführung durch die Emissions-Reduktionseinrichtung und/oder durch den Bypass in Abhängigkeit vom jeweiligen Lastbereich beziehungsweise Luft-Kraftstoff-Verhältnis (Schichtbetrieb oder stöchiometrischer Betrieb) besonders sinnvoll ist. Der Katalysator ist insbesondere ein Dreiwege-Katalysator. Dabei ist vorgesehen, dass die Emissions-Reduktionseinrichtung einen SCR-Katalysator und eine Einspritzvorrichtung zum Einspritzen eines Reduktionsmittels aufweist. Der SCR-Katalysator ergänzt den Katalysator bei der Reduktion der Stickoxide im Abgas. Hierbei ist vorgesehen, dass eine Einspritzeinrichtung der Einspritzvorrichtung zum Einspritzen des Reduktionsmittels in der Abgasanlage vor dem SCR-Katalysator oder am SCR-Katalysator angeordnet ist. Einspritzeinrichtung und SCR-Katalysator sind für hohe Abgastemperaturen ungeeignet.

In einer vorteilhaften Ausgestaltung der Erfindung ist vorgesehen, dass der Verbrennungsmotor ein im Schichtbetrieb mit Luftüberschuss und/oder Ladungsschichtung betreibbarer Verbrennungsmotor ist. Um die niedrige Effizienz des Katalysators bei der mageren Gemischzusammensetzung des Schichtbetriebs zu kompensieren, wird die Emissions-Reduktionseinrichtung im Schichtbetrieb zugeschaltet.

Mit Vorteil ist vorgesehen, dass -zur Führung des Abgases- das Steuerungselement im Bypass angeordnet ist oder der Bypass das Steuerungselement aufweist. Die Führung erfolgt durch an- und abschalten des Bypasses und/oder durch Verstellen seines Querschnitts mittels des Steuerungselements.

Nach einer Weiterbildung der Erfindung ist vorgesehen, dass das Steuerungselement ein Ventil und/oder eine Klappe ist. Ventil und/oder Klappe sind bekannte Steuerungselemente.

Schließlich ist mit Vorteil vorgesehen, dass die Emissions-Reduktionseinrichtung zusätzlich zum SCR-Katalysator einen Oxidationskatalysator umfasst. Dabei ist der Oxidationskatalysator vorzugsweise in Strömungsrichtung des Abgases vor dem SCR-Katalysator und der Einspritzvorrichtung angeordnet.

### Kurze Beschreibung der Zeichnungen

Die Erfindung wird nachfolgend in mehreren Ausführungsbeispielen anhand der zugehörigen Zeichnungen näher erläutert. Es zeigen:
- Figur 1: einen Verbrennungsmotor mit Abgasanlage in einem ersten Ausführungsbeispiel und
- Figur 2: einen Verbrennungsmotor mit Abgasanlage in einem zweiten Ausführungsbeispiel.

### Ausführungsform(en) der Erfindung

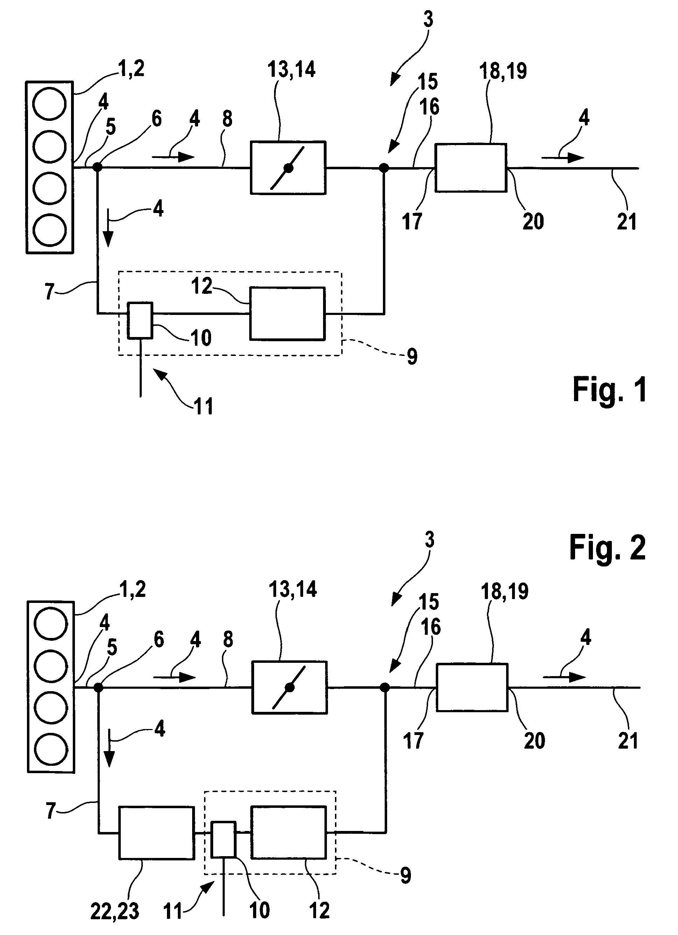

Die Figur 1 zeigt eine schematische Darstellung eines als Ottomotor 1 ausgebildeten Verbrennungsmotors 2 mit einer Abgasanlage 3, durch die das Abgas des Verbrennungsmotors 2 strömt (Pfeil 4). Ein Abgasauslass 4 des Verbrennungsmotors 2 ist an eine Einlassleitung 5 der Abgasanlage 3 angeschlossen. Die Einlassleitung 5 führt - in Strömungsrichtung des Abgaseszu einem Abzweig 6, in dem sich die Abgasanlage 3 in eine Abgasleitung 7 und einen Bypass 8 (eine Bypassleitung) verzweigt. In der Abgasleitung 7 ist eine Emissions-Reduktionseinrichtung 9 angeordnet, die in Strömungsrichtung hintereinander eine als Einspritzdüse ausgebildete Einspritzeinrichtung 10 einer Einspritzvorrichtung 11 und einen SCR-Katalysator 12 aufweist. Die Einspritzvorrichtung 11 weist weitere hier nicht gezeigte Komponenten, wie eine Dosiereinrichtung, einen Vorratsbehälter und ein Leitungssystem, auf. Im Bypass 8 ist ein als Klappe 13 ausgebildetes Steuerungselement 14 angeordnet. Abgasleitung 7 und Bypass 8 werden stromabwärts in einem Zwischenbereich 15 zusammengeführt und münden in eine Zwischenleitung 16, die in den Einlass 17 eines als Dreiwegekatalysator 18 ausgebildeten Katalysator 19 führt. Ein dem Einlass 17 gegenüberliegender Auslass 20 des Katalysators 19 führt über eine weitere Abgasleitung 21 zu einem nicht gezeigten Endbereich der Abgasanlage 4.

Die Figur 2 entspricht im Wesentlichen der Figur 1, sodass hier nur auf die Unterschiede eingegangen wird. In der Abgasleitung 7 ist in Strömungsrichtung des Abgases (Pfeil 4) vor der Einspritzeinrichtung 10 der Emissions-Reduktionseinrichtung 9 eine weitere, als Oxidationskatalysator 22 ausgebildete Emissions-Reduktionseinrichtung 23 angeordnet.

Die Einspritzeinrichtung 10 und der SCR-Katalysator 22 der Emissions-Reduktionseinrichtung 9 sind motornah angeordnet und ein als Dreiwegekatalysator 18 (Three-Way-Catalyst: TWC) ausgebildeter Katalysator 19 ist stromabwärts dahinter angeordnet. Ein um die Einspritzeinrichtung 10 und der SCR-Katalysator 22 herumführender Bypass 8 ermöglicht es, gesteuert durch die Klappe 13, das Abgas vollständig oder auch nur teilweise an beiden vorbei zu führen. Optional ist vor diesen Komponenten 10, 12 ein Oxidationskatalysator 22 angeordnet, dem der Bypass 8 ebenfalls parallel geschaltet ist. Die Einspritzeinrichtung 10 zur Eindosierung von Reduktionsmittel (zum Beispiel AdBlue) befindet sich vor dem SCR-Katalysator 12.

Es ergibt sich folgender Betrieb des Verbrennungsmotors mit Abgasanlage: Im Schichtladebereich beziehungsweise Schichtbetrieb mit einem Luft-Kraftstoff-Verhältnis (Lambda >1) des als BDE-Motor ausgebildeten Ottomotors 1 ist der Wirkungsgrad des Dreiwegekatalysators 18 bezüglich Stickoxiden schlecht.

Daher wird im Schichtbetrieb unter Zugabe des Reduktionsmittels die SCR-Technologie zur Minderung der Stickoxidemission genutzt. In diesem Fall ist die Klappe 13 geschlossen und das gesamte Abgas oder nahezu das gesamte Abgas strömt zunächst an der Einspritzeinrichtung 10 (dem Dosierventil) vorbei und nimmt das eingespritzte Reduktionsmittel auf bevor es über den SCR-Katalysator 12 strömt und dort die Stickoxide mit Hilfe des Reduktionsmittels vermindert werden. Danach strömt das Abgas über den Katalysator 19. Dieser oxidiert dann (bei ausreichender Temperatur) die Kohlenwasserstoff- und Kohlenmonoxid-Emissionen auf; auch ein möglicher NH₃-Schlupf aus dem SCR-Katalysator 12 wird durch den Dreiwegekatalysator 18 oxidiert.

Im Bereich hoher Lasten wechselt der Verbrennungsmotor 2 aus dem Schichtbetrieb in einen stöchiometrischen Betriebsmodus mit Lambda = 1. In diesem Fall wird die Klappe 13 geöffnet und das Abgas strömt über den Bypass 8 direkt zum und über den Katalysator 19. Der Bereich der Abgasleitung 7 (mit der Einspritzeinrichtung 10, dem SCR-Katalysator 12) wird vom Abgas nicht mehr durchströmt, so dass die Temperaturbelastung der Einspritzeinrichtung 10 deutlich gesenkt wird. Der als Dreiwegkatalysator 18 ausgebildete Katalysator 19 mindert nun die NOx-, HC- und CO-Emissionen (mit teilweise über 99% Wirkungsgrad). Die Verwendung der 3-Wege-Technologie in diesem Betriebsmodus (hohe Lasten) verschafft also hohe NOx-Minderung und schont zugleich den NH₃/AdBlue-Vorrat. Der motornahe Anbau der Einspritzeinrichtung 10 und der dadurch ermöglichte motornahe Anbau des SCR-Katalysators 12 ermöglich eine gute Reduktionsmittelaufbereitung und sehr hohe Umsatzraten auch bei niedrigen Lasten beziehungsweise im Schichtbetrieb und beim Kaltstart, da das Abgas im Eindosierbereich und am SCR-Katalysator 12 ausreichend (schnell) warm werden, ohne dass die hohen Abgastemperaturen im Bereich hoher Lasten die Einspritzeinrichtung 10 oder den SCR-Katalysator 12 zerstören würden.

Die Einspritzeinrichtung 10 (das Eindosierventil) und der SCR-Katalysator 12 werden motornah angeordnet und der Katalysator 19 stromabwärts dahinter. Der Bypass 8 um die Emissions-Reduktionseinrichtung 9, 23 (Einspritzeinrichtung 10 und SCR-Katalysator 12 und/oder Oxidationskatalysator 22) herum ermöglicht es, gesteuert durch das Steuerelement 14, das Abgas vollständig oder auch nur teilweise an Einspritzeinrichtung und SCR-Katalysator vorbei zu leiten.

Es ergeben sich folgende Vorteile:
- Die SCR-Technologie kann für den Schichtladebereich (Schichtbetrieb) des BDE-Motors genutzt werden, ohne dass hohe Abgastemperaturen den SCR-Katalysator 12 oder eine andere nicht hochtemperaturbeständige Emissions-Reduktionseinrichtung 9, 23 im hohen Lastbereich zerstören.
- Der motornahe Anbau des SCR-Katalysators 12 ermöglich sehr hohe Umsatzraten auch bei niedrigen Lasten, da der SCR-Katalysator 12 ausreichend (schnell) warm wird.
- Die Verwendung der 3-Wege-Technologie im Bereich hoher Lasten verschafft hohe NOx-Minderung und schont den Vorrat an Reduktionsmittel.
- Möglicher NH₃-Schlupf wird durch den Dreiwegekatalysator 18 aufgefangen; ein teurer Sperrkatalysator wird nicht benötigt. Die erzielbaren Umsätze ohne NH₃-Schlupf gegenüber konventionellen Systemen können somit deutlich höher sein.
- Die motorfernere Anordnung des Dreiwegekatalysators 19 kann es ermöglichen, die zu Katalysatorüberhitzungsschutz oft angewendete Gemischanfettung (Lambda < 1) zu reduzieren oder sogar komplett zu vermeiden.

In der in Figur 2 gezeigten zweiten Verschaltungsmöglichkeit wird der Oxidationskatalysator 22 in die Abgasleitung 7 vor den SCR-Katalysator 12 und die Eindosierstelle 10 für das Reduktionsmittel angeordnet. Hierdurch entstehen folgende zusätzliche Vorteile:
- Der SCR-Katalysator benötigt für hohe Umsatzraten in kaltem Zustand (T <250°C) bis zu 50 % NO₂ Anteil im Abgas. Rohabgas enthält sehr wenig NO₂. Jedoch oxidiert der Oxidationskatalysator 22 einen Teil der NO zu NO₂, sodass die Umsatzraten erheblich gesteigert werden können.
- Der SCR-Katalysator 12 verlangt weiterhin für hohe Umsatzraten in kaltem Zustand (T <250°C) möglichst geringe HC-Emissionen im Abgas. Das Rohabgas enthält jedoch relativ viel Kohlenwasserstoffe (HC), sodass durch die Oxidation der HC über dem Oxidationskatalysator die Umsatzraten erheblich gesteigert werden können.
- Der Oxidationskatalysator 22 kann schon bei geringen Temperaturen Kohlenwasserstoffe und Kohlenmonoxid umsetzen. Dies kann genutzt werden, um mit HC- und CO-reichem Abgas über dem Oxidationskatalysator 22 entsprechende Wärme freizusetzen. Dies beschleunigt dann die Aufheizung des dahinter liegenden SCR-Katalysators 12. Die motorfemere Anordnung des Dreiwegekatalysators und damit der schlechtere HC- und CO-Umsatz vor allem im Kaltstart können durch den motomahen Oxidationskatalysator 22 zumindest ausgeglichen werden.

Weiterhin ergeben sich folgende Vorteile bezüglich der Einspritzeinrichtung 10:
- Die im oberen Lastbereich des Ottomotors 1 im Vergleich zum Dieselmotor höheren Abgastemperaturen beaufschlagen die Einspritzeinrichtung 10 nicht, so dass die Verwendung von AdBlue-Einspritzeinrichtungen, die für die Dieselmotorabgasnachbehandlung entwickelt werden, auch bei Ottomotoren 1 mit Direkteinspritzung (BDE-Motoren) in Verbindung mit SCR-Technologie verwendet werden können.
- Die Einspritzeinrichtung 10 kann für den Schichtladebereich (Schichtbetrieb) des BDE-Motors genutzt werden, ohne dass sie durch hohe Abgastemperaturen im Bereich hoher Lasten zerstört wird.
- Der motornahe Anbau der Einspritzeinrichtung 10 ermöglicht auch bei niedrigen Lasten und im Kaltstart gute Aufbereitungsrandbedingungen für das eingespritzte Reduktionsmittel.
- Trotz motornahem Anbau kann auf eine aktive Kühlung der Einspritzeinrichtung verzichtet werden. Durch den möglichen sehr motornahen Anbau der Einspritzeinrichtung 10 ist es möglich, unter Berücksichtigung der benötigten Mischstrecke, auch den SCR-Katalysator 12 sehr motornah zu verbauen.

## Patentansprüche

1. Verfahren zum schadstoffemissionsarmen Betreiben eines Verbrennungsmotors (2) insbesondere für ein Kraftfahrzeug, mit einer Abgasanlage (3), die mindestens einen Katalysator (19) und mindestens eine Emissions-Reduktionseinrichtung (9, 23) aufweist, wobei ein vom Verbrennungsmotor (2) erzeugtes Abgas in einem Schichtbetrieb durch die Emissions-Reduktionseinrichtung (9, 23) zum Katalyator (19) geführt wird und in einem stöchiometrischen Betrieb zumindest teilweise durch einen parallel zur Emissions-Reduktionseinrichtung (9, 23) geschalteten Bypass (8) vom Verbrennungsmotor (2) zum Katalysator (19) geführt wird, **dadurch gekennzeichnet, dass** die Emissions-Reduktionseinrichtung (9, 23) einen SCR-Katalysator (12) und eine Einspritzvorrichtung (11) aufweist, wobei eine Einspritzeinrichtung (10) der Einspritzvorrichtung (11) ein Reduktionsmittel vor oder in den SCR-Katalysator (12) einspritzt.

2. Verfahren nach Anspruch 1, **dadurch gekennzeichnet, dass** der Verbrennungsmotor (2) in seinem Teillastbetrieb im Schichtbetrieb mit Luftüberschuss und/oder Ladungsschichtung betrieben wird.

3. Verfahren nach einem der vorhergehenden Ansprüche, **dadurch gekennzeichnet, dass** die Führung des Abgases durch An- und Abschalten des Bypasses (8) und/oder ein Verstehen des Querschnitts des Bypasses (8) erfolgt.

## Claims

1. Method for operating an internal combustion engine (2), in particular for a motor vehicle, with low pollutant emissions, said internal combustion engine having an exhaust system (3) which has at least one catalytic converter (19) and at least one emissions reduction device (9, 23), with an exhaust gas produced by the internal combustion engine (2) being guided, in a stratified mode, through the emissions reduction device (9, 23) to the catalytic converter (19), and in a stoichiometric mode, at least partially through a bypass (8), which is connected in parallel with the emissions reduction device (9, 23), from the internal combustion engine (2) to the catalytic converter (19), **characterized in that** the emissions reduction device (9, 23) has an SCR catalytic converter (12) and an injection apparatus (11), with an injection device (10) of the injection apparatus (11) injecting a reducing agent upstream of or into the SCR catalytic converter (12).

2. Method according to Claim 1, **characterized in that** the internal combustion engine (2), in its part-load mode, is operated in the stratified mode with an excess of air and/or charge stratification.

3. Method according to one of the preceding claims, **characterized in that** the guidance of the exhaust gas is effected by activating and deactivating the bypass (8) and/or by adjusting the cross section of the bypass (8).

## Revendications

1. Procédé pour le fonctionnement pauvre en émissions toxiques d'un moteur à combustion interne (2), en particulier pour un véhicule automobile, comprenant une installation de gaz d'échappement (3) qui présente au moins un catalyseur (19) et au moins un dispositif de réduction des émissions (9, 23), un gaz d'échappement produit par le moteur à combustion interne (2) étant guidé pendant un fonctionnement stratifié à travers le dispositif de réduction des émissions (9, 23) jusqu'au catalyseur (19) et pendant un fonctionnement stoechiométrique, étant guidé au moins en partie à travers une dérivation (8) montée parallèlement au dispositif de réduction des émissions (9, 23) depuis le moteur à combustion interne (2) jusqu'au catalyseur (19), **caractérisé en ce que** le dispositif de réduction des émissions (9, 23) présente un catalyseur SCR (12) et un dispositif d'injection (11), un système d'injection (10) du dispositif d'injection (11) injectant un agent réducteur avant ou dans le catalyseur SCR (12).

2. Procédé selon la revendication 1, **caractérisé en ce que** le moteur à combustion interne (2) est entraîné dans son fonctionnement à charge partielle pendant un fonctionnement stratifié avec un excès d'air et/ou une stratification de la charge.

3. Procédé selon l'une quelconque des revendications précédentes, **caractérisé en ce que** le guidage du gaz d'échappement s'effectue par une ouverture et une fermeture de la dérivation (8), et/ou par un réglage de la section transversale de la dérivation (8).
